# EUROPÄISCHE PATENTSCHRIFT

(11) **EP 3 085 972 B1**
(45) Veröffentlichungstag und Bekanntmachung des Hinweises auf die Patenterteilung: **05.06.2019**
(21) Anmeldenummer: 16165133.6
(22) Anmeldetag: 13.04.2016
(51) Int. Cl.: F16B 9/02, F16B 5/02, F16B 9/00, F16B 2/22

(54) **BEFESTIGUNGSANORDNUNG**
MOUNTING ASSEMBLY
DISPOSITIF DE FIXATION

(30) Priorität: 22.04.2015 DE 102015207371
(43) Veröffentlichungstag der Anmeldung: 26.10.2016
(73) Patentinhaber: Mahle International GmbH, 70376 Stuttgart (DE)
(72) Erfinder: GONZALEZ RECHEA, Pedro, 70193 Stuttgart (DE); PFEIFER, Eugen, 70567 Stuttgart (DE)
(74) Vertreter: BRP Renaud & Partner mbB Rechtsanwälte Patentanwälte Steuerberater

(56) Entgegenhaltungen:
- DE-U1- 29 719 733
- JP-U- H0 448 023
- US-A1- 2007 102 924
- US-A1- 2009 078 840

## Beschreibung

Die vorliegende Erfindung betrifft eine Befestigungsanordnung eines zylinderförmigen Bauteils, wie beispielsweise eines Akkumulators einer mobilen Klimaanlage, an einer Karosserie eines Kraftfahrzeugs, gemäß dem Oberbegriff des Anspruchs 1. Die Erfindung betrifft außerdem ein Kraftfahrzeug mit einer solchen Befestigungsanordnung.

Aufgrund der höheren technischen Anforderungen, insbesondere im Hinblick auf Druck und Temperatur in Kreisläufen mit Kohlendioxid (CO₂) als Kältemittel, besitzen die CO₂-Komponenten im Vergleich zu beispielsweise R134a-Komponenten ein vergleichsweise hohes Bauteilgewicht. Aufgrund dieses höheren Gewichts und auch der höheren thermischen und druckbedingten Belastungen, müssen derartige Bauteile einerseits zuverlässig, andererseits jedoch auch kostengünstig in einem Kraftfahrzeug gehalten werden.

Aus der DE 200 05 887 U1 ist eine gattungsgemäße Befestigungsanordnung in der Art einer Bügelhalterung für einen Kältemittel-Behälter einer Fahrzeugklimaanlage, insbesondere eines Akkumulators, bekannt, die eine Befestigungsöffnungen aufweisende Konsole und wenigstens einen mit einem Verschluss um den Kältemittelbehälter spannbaren Bügel besitzt. Der Bügel weist dabei einen Schnellspannverschluss mit integrierten Formschlusselementen zum Spannen und Halten auf. Hierdurch soll eine montagetechnisch einfach, jedoch auch eine hohe Betriebssicherheit gewährleistende Halterung des Kältemittel-Behälters erreicht werden.

Aus der DE 297 19 733 U1 ist eine Befestigungsanordnung mit einem Halter für einen Trockner- bzw. Akkumulator-Behälter einer Fahrzeugklimaanlage bekannt, mit einer annähernd ringförmigen Schelle für den Behälter und wenigstens einer mit der Schelle einstückig verbundenen, zumindest eine Befestigungsöffnung aufweisenden Haltelasche. Der Halter ist hierbei als einstückiges Kunststoffspritzgussformteil aus einem langfaserverstärktem Polymer ausgebildet. Hierdurch soll eine kostengünstige und zugleich gewichtsoptimierte Halterung des Akkumulatorbehälters ermöglicht werden.

Generell besitzen die aus dem Stand der Technik bekannten Halteeinrichtungen bzw. Befestigungsanordnungen jedoch eine vergleichsweise hohe Komplexität und sind dadurch nur aufwändig und teuer herzustellen.

Die vorliegende Erfindung beschäftigt sich daher mit dem Problem, für eine Befestigungsanordnung der gattungsgemäßen Art eine verbesserte oder zumindest eine alternative Ausführungsform anzugeben, die insbesondere kostengünstiger ist und zudem eine zuverlässige und sichere Halterung eines zu haltenden Bauteils ermöglicht.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, eine Befestigungsanordnung zur Halterung eines zylinderförmigen Bauteils, wie beispielsweise eines Akkumulators einer mobilen Klimaanlage, an einer Karosserie eines Kraftfahrzeuges mit einer gabelförmigen Aufnahme auszustatten, in welche das zu haltende zylinderförmige Bauteil formschlüssig zwischen zwei komplementär zu den Gabelzinken ausgebildeten Nuten eingeschoben werden kann. Zur endgültigen Fixierung dient ein Befestigungselement.

Das zylinderförmige Bauteil weist hierzu zwei orthogonal zur Zylinderachse ausgerichtete, bereichsweise in eine Mantelfläche eingegrabene und parallel verlaufende Nuten sowie ein stirnseitiges Sackloch auf. Die Halteeinrichtung wiederum ist die zuvor beschriebene gabelförmige bzw. U-förmige Aufnahme sowie ein Kopfabschnitt mit einer Durchgangsöffnung. Das zylinderförmige Bauteil, beispielsweise der Akkumulator, und die Halteeinrichtung sind dabei derart aufeinander abgestimmt, dass das Bauteil formschlüssig mit seinen beiden Nuten in die U-förmige Aufnahme einschiebbar ist, bis das stirnseitige Sackloch mit der Durchgangsöffnung im Kopfabschnitt der Halteeinrichtung fluchtet. Ebenfalls vorgesehen ist ein Befestigungselement, welches durch die Durchgangsöffnung des Kopfabschnitts in das Sackloch des Bauteils einsteckbar oder einschraubbar ist. Hierdurch kann eine einerseits kostengünstige, andererseits aber äußerst zuverlässige Halteeinrichtung zum Halten eines derartigen Akkumulators geschaffen werden. Die Halteeinrichtung mit der U-förmigen Aufnahme und dem Kopfabschnitt kann dabei beispielsweise aus Metall, insbesondere als Blechformteil, oder aber alternativ auch als Kunststoffspritzgussteil und damit vergleichsweise leicht ausgebildet werden.

Bei einer vorteilhaften Weiterbildung der erfindungsgemäßen Lösung verläuft eine der Stirnseite des Bauteils zugewandte Fläche des halteeinrichtungsseitigen Kopfabschnitts schräg zur Stirnseite des Bauteils und dient damit als Klemmfläche beim Einschieben des Bauteils. Neben der Arretierung des Bauteils in der Halteeinrichtung über das Befestigungselement ist selbstverständlich auch eine Klemmarretierung denkbar, wozu beispielsweise die schräg ausgerichtete und als Klemmfläche ausgebildete Fläche des Kopfabschnitts dienen kann. Zusätzlich oder alternativ kann auch vorgesehen sein, dass das Bauteil zwischen den beiden U-Schenkeln der U-förmigen Aufnahme eingeklemmt ist. Auch hierdurch kann eine zuverlässige und selbstfixierende Arretierung des Bauteils in der Halteeinrichtung geschaffen werden.

Bei einer vorteilhaften Weiterbildung der erfindungsgemäßen Lösung ist eine Innenkontur der U-förmigen Aufnahme komplementär zu einer Außenkontur des Bauteils ausgebildet. Hierdurch kann erreicht werden, dass das Bauteil mit seiner Außenkontur flächig an der Innenkontur der U-förmigen Aufnahme anliegt und dadurch in zumindest zwei Richtungen zuverlässig gehalten wird.

Bei einer weiteren vorteilhaften Ausführungsform der erfindungsgemäßen Lösung weist die Halteeinrichtung eine erste Lasche mit einer Durchgangsöffnung auf. Über diese erste Lasche kann die Halteeinrichtung und darüber auch das Bauteil mit der Karosserie des Kraftfahrzeugs verschraubt werden. Beispielsweise ist denkbar, dass ein karosserieseitig angeschweißter Gewindebolzen vorgesehen ist, der durch die Durchgangsöffnung der ersten Lasche gesteckt und mit einer Mutter gesichert wird. Um dabei eine Schwingungsübertragung zwischen dem Kraftfahrzeug und dem Bauteil zumindest minimieren zu können, kann zumindest ein schwingungsdämpfendes Entkopplungselement mit einer äußeren Ringnut vorgesehen sein, welches die erste Lasche durchgreift und wobei ein Rand der zugehörigen Durchgangsöffnung in die Ringnut eingreift und darüber das Entkopplungselement fixiert. Selbstverständlich kann in analoger Weise eine zweite Lasche sowie eine dritte Lasche mit jeweils einer Durchgangsöffnung vorgesehen sein, wobei die Durchgangsöffnung der zweiten Lasche orthogonal zur Durchgangsöffnung der ersten Lasche und die Durchgangsöffnung der dritten Lasche orthogonal zu den Durchgangsöffnungen der ersten und zweiten Lasche ausgerichtet ist. Hierdurch wäre eine Fixierung der Halteeinrichtung in sämtlichen drei Raumrichtungen gegenüber dem Kraftfahrzeug möglich.

Zweckmäßig sind zumindest zwei Entkopplungselemente mit unterschiedlichen Dämpfungseigenschaften und/oder unterschiedlichen Größen vorgesehen. Im Kraftfahrzeug wirken auf das über die erfindungsgemäße Befestigungsanordnung zu haltende Bauteil unterschiedliche Kräfte, wobei beispielsweise die von der Halteeinrichtung in vertikaler Richtung aufzunehmenden Kräfte größer sind als diejenigen in horizontaler Richtung. Aus diesem Grund können beispielsweise bedarfsgerechte und belastungsentsprechende Entkopplungselemente vorgesehen sein, so dass beispielsweise zur Aufnahme von Vertikalkräften ein größeres Entkopplungselement vorgesehen ist.

Bei einer weiteren vorteilhaften Ausführungsform der erfindungsgemäßen Lösung ist an der Karosserie ein Gewindebolzen angeordnet, der die Durchgangsöffnung des jeweiligen Entkopplungselements durchdringt. Darüber hinaus ist eine zu dem jeweiligen Entkopplungselement passende Kragenhülse vorgesehen, die in montiertem Zustand in der Durchgangsöffnung des Entkopplungselements zwischen dem Gewindebolzen und dem Entkopplungselement angeordnet ist. Über eine Mutter, die in auf den Gewindebolzen aufgedrehtem Zustand das jeweilige Entkopplungselement über die Kragenhülse gegen die Karosserie vorspannt, kann das Bauteil gegenüber der Karosserie fixiert werden. Die Kragenhülse selbst weist dabei üblicherweise eine zumindest geringfügig kürzere axiale Länge auf als das zugehörige Entkopplungselement, wodurch die Kragenhülse beim Festziehen der Mutter auf dem Bolzen das Entkopplungselement staucht und damit gegen die Karosserie vorspannt. Die Kragenhülse besitzt dabei einen hohlzylindrischen Schaft, an welchen sich der stirnseitige Radialkragen anschließt. Der hohlzylindrische Schaft umgrenzt mit seiner Innenmantelfläche in montiertem Zustand den Gewindebolzen, wogegen er mit seiner Außenmantelfläche in der Durchgangsöffnung des Entkopplungselements angeordnet ist. Der Außenradius des Schafts der Kragenhülse entspricht dabei dem Innenradius der Durchgangsöffnung des Entkopplungselements.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

### Es zeigen, jeweils schematisch,

- Fig. 1: eine erfindungsgemäße Befestigungsanordnung in einer Ansicht,
- Fig. 2: eine Explosionsdarstellung der erfindungsgemäßen Befestigungsanordnung,
- Fig. 3: eine Schnittdarstellung durch eine Verschraubung einer zur Befestigungsanordnung gehörenden Halteeinrichtung mit einer Karosserie eines Kraftfahrzeugs,
- Fig. 4: eine erste mögliche Ausführungsform einer Halteeinrichtung mit einer ersten Lasche,
- Fig. 5: eine Darstellung wie in Fig. 4, jedoch zusätzlich mit einer zweiten Lasche,
- Fig. 6: eine Darstellung wie in Fig. 5, jedoch zusätzlich mit einer dritten Lasche.

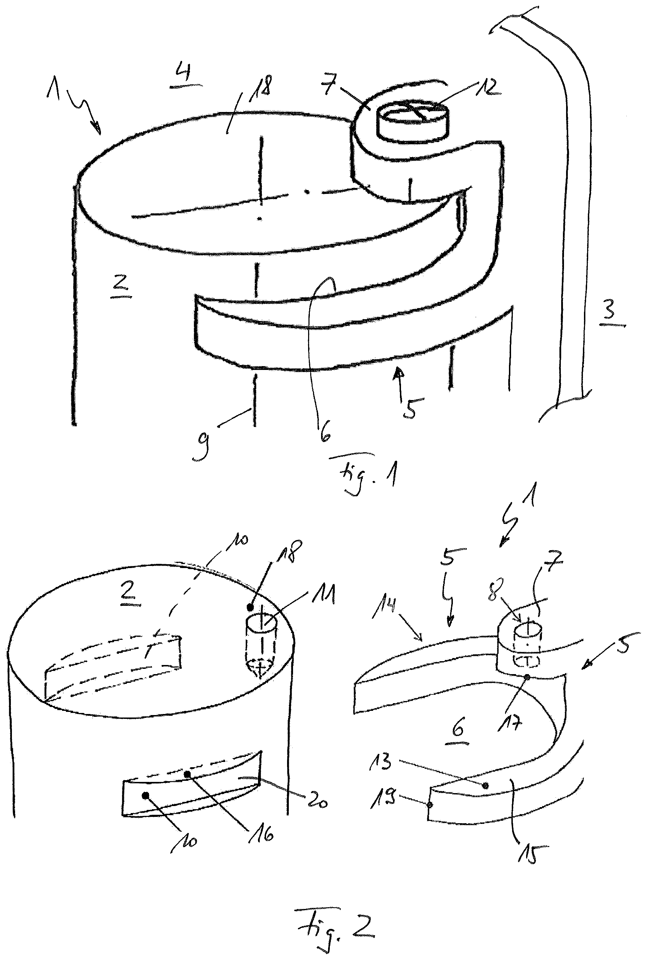

Entsprechend den Fig. 1 und 2 weist eine erfindungsgemäße Befestigungsanordnung 1 eines zylinderförmigen Bauteils 2, beispielsweise eines Akkumulators einer mobilen Klimaanlage, an einer Karosserie 3 eines Kraftfahrzeugs 4 eine Halteeinrichtung 5 mit einer U-förmigen Aufnahme 6 und einem Kopfabschnitt 7 mit einer Durchgangsöffnung 8 auf. Das zylinderförmige Bauteil 2 besitzt zwei orthogonal zur Zylinderachse 9 ausgerichtete, bereichsweise in eine Mantelfläche desselben eingegrabene und parallel verlaufende Nuten 10 sowie ein stirnseitiges Sackloch 11. Das Bauteil 2 und die Halteeinrichtung 5 sind dabei erfindungsgemäß derart aufeinander abgestimmt, dass das Bauteil 2 formschlüssig mit seinen beiden Nuten 10 in die U-förmige Aufnahme 6 einschiebbar ist, bis das stirnseitige Sackloch 11 mit der Durchgangsöffnung 8 im Kopfabschnitt 7 der Halteeinrichtung 5 fluchtet und es ermöglicht, ein Befestigungselement 12 (vgl. Fig. 1) durch die Durchgangsöffnung 8 des Kopfabschnitts 7 in das Sackloch 11 des Bauteils 2 einzustecken bzw. einzuschrauben.

Die U-förmige Aufnahme 6 wird dabei durch zwei U-Schenkel 13 und 14 (vgl. Fig. 2) gebildet, wobei bei in die Aufnahme 6 eingeschobenem Bauteil 2 ein Kontakt zwischen den Flächen 15 und 16 sowie 17 und 18 in einer ersten Variante sowie ein gleichzeitiger Kontakt der Flächen 15 und 16, 17 und 18 sowie 19 und 20 in einer zweiten Variante denkbar ist. Die Geometrie der U-förmigen Aufnahme 6 ist dabei vorzugsweise derart ausgelegt, dass das zylinderförmige Bauteil 2 allein durch die Klemmkraft zwischen den zuvor genannten Flächen 15 bis 20 gehalten werden kann. Das Befestigungselement 12 kann somit einzig und allein als Verliersicherung dienen.

Denkbar ist in diesem Zusammenhang auch, dass eine der Stirnseite 18 (Fläche 18) zugewandte Fläche 17 des halteeinrichtungsseitigen Kopfabschnitts 7 schräg zur Fläche 18 (Stirnseite) verläuft und damit als Klemmfläche ausgebildet ist. Die schräge Fläche 17 führt dabei zu einem Verklemmen, sofern das Bauteil 2 in die U-förmige Aufnahme 6 eingeschoben wird.

Betrachtet man die Fig. 2, so kann man erkennen, dass eine Innenkontur der U-förmigen Aufnahme 6 komplementär zu einer Außenkontur des Bauteils 2 ausgebildet ist, wodurch eine flächiger Kontakt zwischen Bauteil 2 und Aufnahme 6 gegeben ist.

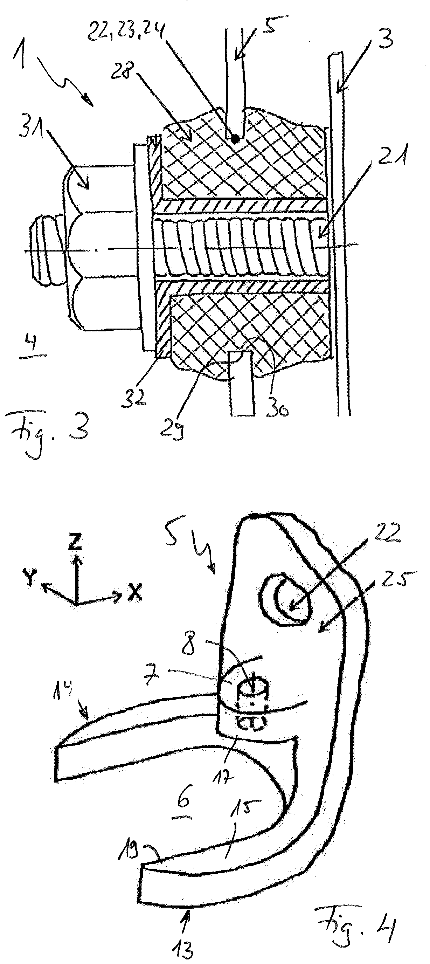

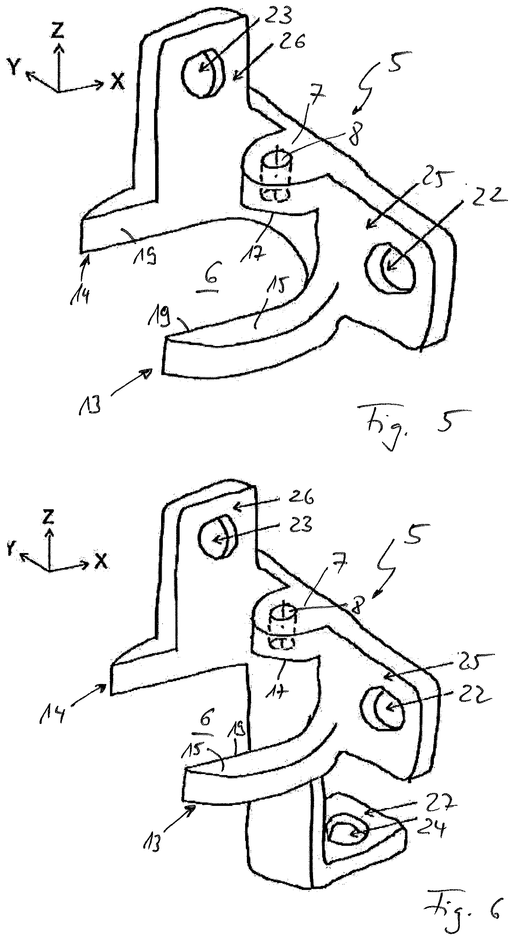

Eine Befestigung der Halteeinrichtung 5 an der Karosserie 3 des Kraftfahrzeugs 4 erfolgt dabei beispielsweise über einen an der Karosserie 3 angeordneten Gewindebolzen 21 (vgl. Fig. 3). Dieser Gewindebolzen 21 wird dabei durch eine Durchgangsöffnung 22, 23 oder 24 der Halteeinrichtung 5 gesteckt. Die Durchgangsöffnung 22 ist dabei im Bereich einer ersten Lasche 25 der Halteeinrichtung 5 angeordnet, wobei die Durchgangsöffnung 23 im Bereich einer zweiten Lasche 26 angeordnet ist (vgl. Fig. 5). Betrachtet man die Fig. 6, so weist die dort abgebildete Halteeinrichtung 5 eine dritte Lasche 27 mit der Durchgangsöffnung 24 auf, wobei diese Durchgangsöffnung 24 orthogonal zur Durchgangsöffnung 22 und 23 ist. Auch die dritte Lasche 27 ist dabei orthogonal zur ersten Lasche 25 und orthogonal zur zweiten Lasche 26 ausgerichtet. Die zweite Lasche 26 ist orthogonal zur ersten Lasche 25 ausgerichtet.

Zur Schwingungsentkopplung der Halteeinrichtung 5 von der Karosserie 3 des Kraftfahrzeugs 4 kann ein schwingungsdämpfendes Entkopplungselement 28 (vgl. Fig. 3) mit einer äußeren Ringnut 29 vorgesehen sein, welches eine zugehörige Lasche 25, 26, 27 durchgreift und wobei ein Rand 30 der zugehörigen Durchgangsöffnung 22, 23, 24 in die Ringnut 29 eingreift. Zur Befestigung ist eine Mutter 31 vorgesehen, die in auf den Gewindebolzen 21 aufgedrehtem Zustand das jeweilige Entkopplungselement 28 über eine Kragenhülse 32 gegen die Karosserie 3 vorspannt. Die Kragenhülse 32 ist dabei sowohl passend zum Entkopplungselement 28, als auch passend zum Gewindebolzen 21 ausgebildet. Die Mutter 31 liegt dabei an dem stirnseitigen Kragen der Kragenhülse 32 an.

Da im Betrieb unterschiedliche Kräfte in vertikaler Richtung (Z-Richtung) und horizontaler Richtung (X-Richtung und Y-Richtung) aufgenommen werden sollen, können auch zumindest zwei Entkopplungselemente 28 mit unterschiedlichen Dämpfungseigenschaften und/oder Größen vorgesehen sein.

Mit der Halteeinrichtung 5 lässt sich einerseits eine zuverlässige und sichere Fixierung des Bauteils 2 erreichen, welche zudem kostengünstig ist.

## Patentansprüche

1. Befestigungsanordnung (1) eines zylinderförmigen Bauteils (2), wie beispielsweise eines Akkumulators einer mobilen Klimaanlage, an einer Karosserie (3) eines Kraftfahrzeugs (4),
**dadurch gekennzeichnet,**
- **dass** das zylinderförmige Bauteil (2) zwei orthogonal zur Zylinderachse (9) ausgerichtete, bereichsweise in eine Mantelfläche eingegrabene und parallel verlaufene Nuten (10) sowie ein stirnseitiges Sackloch (11) aufweist,
- **dass** eine Halteeinrichtung (5) mit einer U-förmigen Aufnahme (6) und einem Kopfabschnitt (7) mit einer Durchgangsöffnung (8) vorgesehen ist,
- **dass** das Bauteil (2) und die Halteeinrichtung (5) derart aufeinander abgestimmt sind, dass das Bauteil (2) formschlüssig mit seinen beiden Nuten (10) in die U-förmige Aufnahme (6) einschiebbar ist, bis das stirnseitige Sackloch (11) mit der Durchgangsöffnung (8) im Kopfabschnitt (7) der Halteeinrichtung (5) fluchtet,
- **dass** ein Befestigungselement (12) vorgesehen ist, welches durch die Durchgangsöffnung (8) des Kopfabschnitts (7) in das Sackloch (11) des Bauteils (2) einsteckbar oder einschraubbar ist.

2. Befestigungsanordnung nach Anspruch 1,
**dadurch gekennzeichnet, dass**
eine der Stirnseite (18) des Bauteils (2) zugewandte Fläche (17) des halteeinrichtungsseitigen Kopfabschnitts (7) schräg zur Stirnseite (18) verläuft und damit als Klemmfläche ausgebildet ist.

3. Befestigungsanordnung nach Anspruch 1 oder 2,
**dadurch gekennzeichnet, dass**
das Bauteil (2) zwischen zwei U-Schenkeln (13,14) der U-förmigen Aufnahme (6) eingeklemmt ist.

4. Befestigungsanordnung nach einem der Ansprüche 1 bis 3,
**dadurch gekennzeichnet, dass**
die U-förmige Aufnahme (6) mit einer Innenkontur flächig an einer Außenkontur des Bauteils (2) bzw. der Nuten (10) anliegt.

5. Befestigungsanordnung nach einem der vorhergehenden Ansprüche, **dadurch gekennzeichnet, dass**
die Halteeinrichtung (5) eine erste Lasche (25) mit einer Durchgangsöffnung (22) aufweist.

6. Befestigungsanordnung nach Anspruch 5,
**dadurch gekennzeichnet, dass**
die Halteeinrichtung (5) eine zweite Lasche (26) mit einer Durchgangsöffnung (23) aufweist, die orthogonal zur Durchgangsöffnung (22) der ersten Lasche (25) ausgerichtet ist.

7. Befestigungsanordnung nach Anspruch 6,
**dadurch gekennzeichnet, dass**
die Halteeinrichtung (5) eine dritte Lasche (27) mit einer Durchgangsöffnung (24) aufweist, die orthogonal zu den Durchgangsöffnungen (22,23) der ersten und zweiten Lasche (25,26) ausgerichtet ist.

8. Befestigungsanordnung nach einem der Ansprüche 5 bis 7,
**dadurch gekennzeichnet, dass**
zumindest ein schwingungsdämpfendes Entkopplungselement (28) mit einer äußeren Ringnut (29) vorgesehen ist, welches eine zugehörige Lasche (25,26,27) durchgreift und wobei ein Rand (30) der zugehörigen Durchgangsöffnung (22,23,24) in die Ringnut (29) eingreift.

9. Befestigungsanordnung nach Anspruch 8,
**dadurch gekennzeichnet, dass**
zumindest zwei Entkopplungselemente (28) mit unterschiedlichen Dämpfungseigenschaften und/oder Größen vorgesehen sind.

10. Befestigungsanordnung nach einem der Ansprüche 8 oder 9,
**dadurch gekennzeichnet, dass**
- an der Karosserie (3) ein Gewindebolzen (21) angeordnet ist, der die Durchgangsöffnung (22,23,24) des jeweiligen Entkopplungselements (28) durchdringt,
- eine zu dem jeweiligen Entkopplungselement (28) passend ausgebildete Kragenhülse (32) vorgesehen ist, die in montiertem Zustand in der Durchgangsöffnung des Entkopplungselements (28) zwischen dem Gewindebolzen (21) und dem Entkopplungselement (28) angeordnet ist,
- eine Mutter (31) vorgesehen ist, die in auf den Gewindebolzen (21) aufgedrehtem Zustand das jeweilige Entkopplungselement (28) über die Kragenhülse (32) gegen die Karosserie (3) vorspannt.

11. Befestigungsanordnung nach Anspruch 10,
**dadurch gekennzeichnet, dass**
die Mutter (31) an einem stirnseitigen Kragen der Kragenhülse (32) anliegt.

12. Kraftfahrzeug (4) mit einer Befestigungsanordnung (1) nach einem der Ansprüche 1 bis 11.

## Claims

1. Mounting arrangement (1) of a cylinder-shaped component (2), such as for example an accumulator of a mobile air-conditioning unit, on a car body (3) of a motor vehicle (4),
**characterised in**
- **that** the cylinder-shaped component (2) has two grooves (10) aligned orthogonally to the cylinder axis (9), in portions dug into a shell surface and extended in parallel, and an end-face blind hole (11),
- **that** a holding device (5) is provided having a U-shaped receptacle (6) and a head portion (7) having a through opening (8),
- **that** the component (2) and the holding device (5) are coordinated with one another such that the component (2) can be inserted form-fittingly with its two grooves (10) into the U-shaped receptacle (6), until the end-face blind hole (11) is flush with the through opening (8) in the head portion (7) of the holding device (5),
- **that** a mounting element (12) is provided which can be inserted or can be screwed in through the through opening (8) of the head portion (7) into the blind hole (11) of the component (2).

2. Mounting arrangement according to claim 1,
**characterised in that**
a surface (17) of the holding device-side head portion (7), said surface facing the end face (18) of the component (2), extends obliquely to the end face (18) and is thereby formed as a clamping surface.

3. Mounting arrangement according to claim 1 or 2,
**characterised in that**
the component (2) is clamped between two U-legs (13, 14) of the U-shaped receptacle (6).

4. Mounting arrangement according to any of claims 1 to 3,
**characterised in that**
the U-shaped receptacle (6) abuts in a planar manner with an internal contour on an external contour of the component (2) or of the grooves (10).

5. Mounting arrangement according to any of the preceding claims,
**characterised in that**
the holding device (5) has a first lug (25) having a through opening (22).

6. Mounting arrangement according to claim 5,
**characterised in that**
the holding device (5) has a second lug (26) having a through opening (23) which is aligned orthogonally to the through opening (22) of the first lug (25).

7. Mounting arrangement according to claim 6,
**characterised in that**
the holding device (5) has a third lug (27) having a through opening (24), which is aligned orthogonally to the through openings (22, 23) of the first and second lugs (25, 26).

8. Mounting arrangement according to any of claims 5 to 7,
**characterised in that**
at least one vibration-damping decoupling element (28) is provided having an exterior ring groove (29), which decoupling element engages through an associated lug (25, 26, 27) and wherein an edge (30) of the associated through opening (22, 23, 24) engages in the ring groove (29).

9. Mounting arrangement according to claim 8,
**characterised in that**
at least two decoupling elements (28) are provided having different damping qualities and/or sizes.

10. Mounting arrangement according to any of claims 8 or 9,
**characterised in that**
- on the car-body (3) is disposed a threaded bolt (21) which penetrates through the through opening (22, 23, 24) of the respective decoupling element (28),
- a collar sleeve (32) is provided, formed in a manner fitting to the respective decoupling element (28), which collar sleeve in installed state is disposed in the through opening of the decoupling element (28) between the threaded bolt (21) and the decoupling element (28),
- a nut (31) is provided which in a condition threaded onto the threaded bolt (21) biases the respective decoupling element (28) above the collar sleeve (32) against the car body (3).

11. Mounting arrangement according to claim 10,
**characterised in that**
the nut (31) abuts on an end-face collar of the collar sleeve (32).

12. Motor vehicle (4) having a mounting arrangement (1) according to one of claims 1 to 11.

## Revendications

1. Dispositif de fixation (1) d'une pièce cylindrique (2), par exemple d'un accumulateur d'une installation de climatisation mobile, à une carrosserie (3) d'un véhicule automobile (4),
**caractérisé en ce que**
- la pièce cylindrique (2) comporte deux rainures (10) orientées perpendiculairement à l'axe de cylindre (9), creusées par endroits dans une surface enveloppante et parallèles, ainsi qu'un trou borgne (11) côté frontal,
- un dispositif de retenue (5) est prévu avec un logement (6) en forme de U et une partie supérieure (7) munie d'une ouverture de passage (8),
- la pièce (2) et le dispositif de retenue (5) sont adaptés de telle manière l'un à l'autre que la pièce (2) peut être introduite en glissant par concordance de forme avec ses deux rainures (10) dans le logement (6) en forme de U jusqu'à ce que le trou borgne (11) côté frontal et l'ouverture de passage (8) dans la partie supérieure (7) du dispositif de retenue (5) soient alignés,
- un élément de fixation (12) est prévu, lequel peut être enfoncé ou vissé, par l'ouverture de passage (8) de la partie supérieure (7), dans le trou borgne (11) de la pièce (2).

2. Dispositif de fixation selon la revendication 1, **caractérisé en ce qu'**une surface (17), proche du côté frontal (18) de la pièce (2), de la partie supérieure (7) côté dispositif de retenue s'étend obliquement par rapport au côté frontal (18) et est ainsi réalisée comme surface de serrage.

3. Dispositif de fixation selon la revendication 1 ou 2, **caractérisé en ce que** la pièce (2) est serrée entre deux branches de U (13, 14) du logement (6) en forme de U.

4. Dispositif de fixation selon l'une quelconque des revendications 1 à 3, **caractérisé en ce que** le logement (6) en forme de U s'appuie avec un contour intérieur, par sa surface, contre un contour extérieur de la pièce (2) respectivement des rainures (10).

5. Dispositif de fixation selon l'une quelconque des revendications précédentes, **caractérisé en ce que** le dispositif de retenue (5) comporte un premier collier (25) avec une ouverture de passage (22).

6. Dispositif de fixation selon la revendication 5, **caractérisé en ce que** le dispositif de retenue (5) comporte un deuxième collier (26) avec une ouverture de passage (23) qui est orienté perpendiculairement à l'ouverture de passage (22) du premier collier (25).

7. Dispositif de fixation selon la revendication 6, **caractérisé en ce que** le dispositif de retenue (5) comporte un troisième collier (27) avec une ouverture de passage (24) qui est orienté perpendiculairement aux ouvertures de passage (22, 23) des premier et deuxième colliers (25, 26).

8. Dispositif de fixation selon l'une quelconque des revendications 5 à 7, **caractérisé en ce qu'**il est prévu au moins un élément de découplage (28) amortisseur de vibrations avec une rainure annulaire extérieure (29), lequel élément passe à travers un collier (25, 26, 27) associé, et dans lequel un bord (30) de l'ouverture de passage (22, 23, 24) associé pénètre dans la rainure annulaire (29).

9. Dispositif de fixation selon la revendication 8, **caractérisé en ce qu'**il est prévu au moins deux éléments de découplage (28) avec des propriétés d'amortissement différentes et/ou des dimensions différentes.

10. Dispositif de fixation selon l'une quelconque des revendications 8 ou 9, **caractérisé en ce que**
- un axe fileté (21) est agencé au niveau de la carrosserie (3), lequel axe fileté passe à travers l'ouverture de passage (22, 23, 24) de l'élément de découplage (28) respectif,
- il est prévu une douille à collet (32) qui est réalisé ajusté à l'élément de découplage (28) respectif et qui est agencé à l'état monté dans l'ouverture de passage de l'élément de découplage (28) entre l'axe fileté (21) et l'élément de découplage (28),
- il est prévu un écrou (31) qui, dans l'état vissé sur l'axe fileté (21), contraint l'élément de découplage (28) respectif contre la carrosserie (3) par l'intermédiaire de la douille à collet (32).

11. Dispositif de fixation selon la revendication 10, **caractérisé en ce que** l'écrou (31) s'appuie contre un collet, côté frontal, de la douille à collet (32).

12. Véhicule automobile (4) avec un dispositif de fixation (1) selon l'une quelconque des revendications 1 à 11.
